# EUROPEAN PATENT SPECIFICATION

(11) **EP 4 334 870 B1**
(45) Date of publication and mention of the grant of the patent: **23.07.2025**
(21) Application number: 22724550.3
(22) Date of filing: 29.04.2022
(51) Int. Cl.: G06Q 10/10, G06Q 10/00, G06Q 10/04, G07C 5/00

(54) **SYSTEM AND METHOD FOR GENERATING SERVICING SCHEDULE FOR MACHINE**
SYSTEM UND VERFAHREN ZUR ERZEUGUNG EINES WARTUNGSPLANS FÜR EINE MASCHINE
SYSTÈME ET PROCÉDÉ DE GÉNÉRATION DE PROGRAMME D'ENTRETIEN POUR MACHINE

(30) Priority: 03.05.2021 IN 202111020105
(43) Date of publication of application: 13.03.2024
(73) Proprietor: Caterpillar Inc., Peoria, IL 61629-9510 (US)
(72) Inventor: SUKUMARAN, Sriram, Chennai 603103 (IN); SELVARAJ, Vishnu G., Trichy 620005 (IN)
(74) Representative: Novagraaf Group
(86) International application number: PCT/US2022/026877
(87) International publication number: WO 2022/235497

(56) References cited:
- CA-A1- 2 816 469
- US-B2- 9 084 937

## Description

### Technical Field

The present disclosure relates to a system for generating a servicing schedule for different machines in order to conduct servicing or replacement of machine components.

### Background

Generally, machines, such as construction machines, require periodic maintenance/servicing to function in an optimal manner. Several techniques are used to generate an aftermarket servicing lead for such machines. Typically, a number of monitoring elements are considered for generating the aftermarket servicing lead for minimizing a downtime of the machine. Such monitoring elements may include, for example, operating hours of the machines, time elapsed since a previous maintenance schedule, and the like.

However, generation of the aftermarket servicing lead based on such monitoring elements may lack precision, transparency, and accuracy, which may affect aftermarket sales operations. Further, the aftermarket servicing lead may not provide a detailed information and insight of a condition of the machine. Thus, the aftermarket servicing lead generated based on such monitoring elements may lead to undesirable increase in a repair downtime of the machine and/or cost of maintenance and may also reduce productivity. Further, in some cases, lack of relevant information presented by the aftermarket servicing lead may cause rejection of such aftermarket servicing leads at customer end. Furthermore, such aftermarket servicing leads do not provide a root cause of failure in machine components as they do not provide real-time insights related to condition-based challenges.

U.S. Patent Number 8,954,222, hereinafter referred to as '222 patent, describes a system, method, and apparatus for retrieving trouble codes from a motor vehicle and retrieving only relevant diagnostic information relative to the returned codes from one or more remote diagnostic libraries. An electronic diagnostic library contains generalized diagnostic vehicle information tagged with trouble code identification IDs at a first location, and a diagnostic tool at a second location requests only relevant diagnostic information from the electronic library that is tagged with trouble code identification IDs corresponding to the retrieved trouble codes. The diagnostic tool receives the specific diagnostic vehicle information at the first location and may store the specific vehicle information locally prior to displaying an index to the information to a repair technician. Further, the second specific diagnostic information is different than the first specific diagnostic information. However, the '222 patent does not describe usage of real-time conditions or faults associated with a machine or the components of the machine for generation of a servicing/maintenance schedule. Further, the '222 patent does not describe and upfront presentation of the real-time machine conditions or faults.

US 9,084,937 B2 discloses systems and methods for an online predictive diagnostic and prognostic maintenance system. The systems and methods may be configured for use with networked gaming machines. The systems and methods may operate in real time and may detect and analyze data representing various indicators of machine performance or a current or future decrease in machine performance. The data may represent or be used to predict machine performance and risk of failure and to identify necessary or recommended repair, maintenance or other performance issues. In another embodiment systems and methods are disclosed for automated analysis of data regarding machine operation and generation of rules related to predicting the future performance, repair and maintenance needs of machines.

CA 2 816 469 A1 discloses systems and methods for an online predictive diagnostic and prognostic maintenance system. The systems and methods may be configured for use with networked gaming machines. The systems and methods may operate in real time and may detect and analyze data representing various indicators of machine performance or a current or future decrease in machine performance. The data may represent or be used to predict machine performance and risk of failure and to identify necessary or recommended repair, maintenance or other performance issues. In another embodiment systems and methods are disclosed for automated analysis of data regarding machine operation and generation of rules related to predicting the future performance, repair and maintenance needs of machines.

### Summary of the Disclosure

In one aspect of the present disclosure, a system according to claim 1 is provided.

In another aspect of the present disclosure, a method according to claim 11 is provided.

Other features and aspects of this disclosure will be apparent from the following description and the accompanying drawings.

### Brief Description of the Drawings

FIG. 1 illustrates a block diagram of a system for generating a servicing schedule for a machine, according to examples of the present disclosure;
FIG. 2 illustrates a flowchart for a process to assign a priority for the servicing schedule, according to examples of the present disclosure;
FIGS. 3A and 3B illustrate a dashboard displayed on a user interface associated with the system of FIG. 1, according to examples of the present disclosure;
FIG. 4 illustrates a schematic diagram of an impact of a fault code, a fluid test result, and/or an inspection data on an acceptance or rejection of the servicing schedule, according to examples of the present disclosure;
FIG. 5 illustrates a flowchart for a process for generation of a service report, according to examples of the present disclosure; and
FIG. 6 illustrates a flowchart for a method for generating the servicing schedule for the machine, according to examples of the present disclosure.

### Detailed Description

Wherever possible, the same reference numbers will be used throughout the drawings to refer to the same or the like parts. Wherever possible, corresponding or similar reference numbers will be used throughout the drawings to refer to the same or corresponding parts.

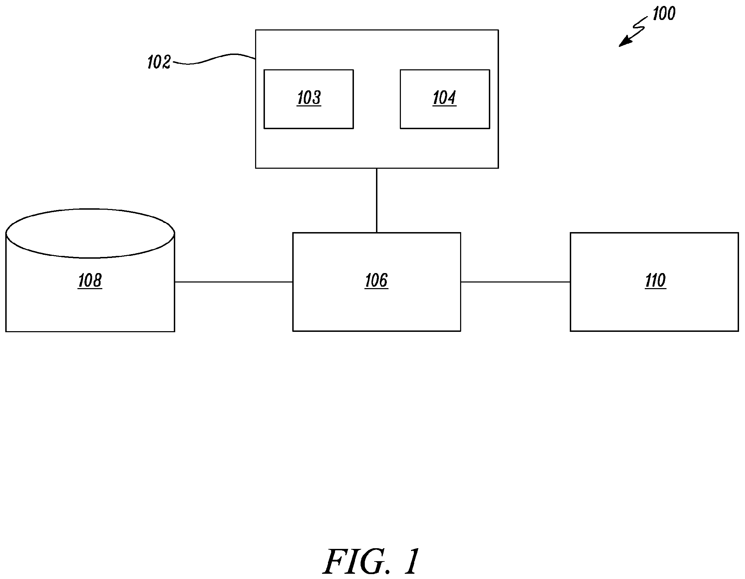

FIG. 1 illustrates a block diagram of a system 100 for generating a servicing schedule for a machine 102. In an example, the machine 102 may include any type of an on-highway machine or an off-highway machine. For example, the machine 102 may include an excavator, a wheel loader, a haul truck, a paving machine, and the like. The machine 102 includes an Electronic Control Module (ECM) 104 to control a number of machine operations. For example, the ECM 104 may be used to control operations related to an engine of the machine 102 or a hydraulic system of the machine 102, without any limitations. The ECM 104 may include a memory device (not shown) to store and collect data from a number of sensors associated with the machine 102.

Further, the term "servicing schedule" as used herein may be defined as a periodic servicing event of the machine 102 that may be generated to service, repair, or replace certain components 103 of the machine 102. The servicing schedule may include an approach towards machine management and may be performed either periodically or as per operating conditions of the machine 102 from a time period when the machine 102 is purchased until an end of a useful life of the machine 102. The servicing schedule may be generated to perform a regular systematic inspection, modification, and replacement of the components 103 of the machine 102 as well as for performance testing and analysis. The components 103 of the machine 102 may be hereinafter interchangeably referred to as "machine components 103", without any limitations. The servicing schedule may assist in identification of potential causes of failures of the machine components 103. The failure may include a sudden failure, an intermittent failure, a gradual failure, thermally induced failure, mechanically induced failure, erratic failure, and the like. The servicing schedule may aim to prevent failures in the machine components 103 by predicting a root cause of such failures.

In an example, the servicing schedule for the machine 102 may be a proactive measure to prevent unplanned repair downtime of the machine 102. In another example, the servicing schedule may highlight a fault associated with one or several components 103 of the machine 102. Further, regular servicing may help to predict failure of machine components 103. The servicing schedule may also help an owner to detect and troubleshoot faults in the machine components 103 before any failure or breakdown. During the servicing of the machine 102, a number of corrective actions may be taken to ensure reliability and performance of the machine 102.

Further, the system 100 includes a controller 106. The controller 106 may be communicably coupled with the ECM 104 of the machine 102. The ECM 104 and the system 100 may be communicably coupled via a wireless transmission system. Such an arrangement allows the system 100 to retrieve real time data associated with the machine 102 from the ECM 104 of the machine 102. Although the single machine 102 is illustrated herein, the controller 106 may be in communication with ECMs of a number of different machines, without any limitations. The controller 106 and the ECM 104 may be embodied as a single microprocessor or multiple microprocessors. Numerous commercially available microprocessors may be configured to perform the functions of the controller 106 and the ECM 104. It should be appreciated that the controller 106 and the ECM 104 may embody a microprocessor capable of controlling numerous functions. A person of ordinary skill in the art will appreciate that the controller 106 and the ECM 104 may additionally include other components and may also perform other functions not described herein.

Further, the controller 106 receives a servicing information pertaining to the machine 102 for generating the servicing schedule. Specifically, the controller 106 receives an input signal pertaining to the servicing information for the machine 102. In some examples, the servicing information is used to detect and analyze a condition of the machine 102. The servicing information provides information related to the components 103 of the machine 102, and more particularly, faults prevailing in the components 103. The servicing information includes an aftermarket servicing lead, a fault code from the machine 102, a fluid test result for the machine 102, and/or an inspection data for the machine 102.

Further, the system 100 may include an input device (not shown) to feed the servicing information into the system 100. The system 100 may also include a database 108 to store some servicing information therein. It should be noted that the controller 106 may receive the servicing information from a number of external sources. For example, the controller 106 may receive the servicing information from various service providers, customers/end users/owners of the machine 102, contractors, and the like. Further, the controller 106 may be communicably coupled with various external sources for obtaining the servicing information via a cloud computing system, a mobile application, wireless transmission systems, and the like. Moreover, the controller 106 analyzes the input signal for generating a service report that contains the servicing information. The service report is used for generating the servicing schedule for the machine 102. In one example, the controller 106 may generate the servicing schedule using all factors, i.e., the aftermarket servicing lead, the fault code from the machine 102, the fluid test result for the machine 102, and/or the inspection data for the machine 102. In another example, a combination of the aftermarket servicing lead and one or all of the fault code, the fluid test result, and/or the inspection data may be used to generate the servicing schedule, without any limitations.

The service report is presented on a user interface 110. Specifically, the system 100 includes the user interface 110 for receiving the service report from the controller 106. The user interface 110 is communicably coupled with the controller 106. The user interface 110 of the system 100 allows interactions between a servicing personnel and the system 100. This interaction allows the servicing personnel to take effective and necessary actions on the machine 102 based on the generated service report. The user interface 110 may include a command line interface, a menu-driven interface, a graphical user interface, a touchscreen, and the like. In some examples, the user interface 110 may include a handheld or portable device that may be present with the servicing personnel. The user interface 110 may include a mobile phone, a tablet, a laptop, and the like. Alternatively, the user interface 110 may include a laptop or a display device that is present at a location where the servicing personnel is present. The service report may include a text report, an audio report, a video report, and the like.

In an example, the term "aftermarket servicing lead" as used herein in relation to the servicing information may relate to a servicing schedule that may include a series of programs scheduled for repair and maintenance of the machine 102. The various programs may be customized to meet specific requirements of the machine 102. The aftermarket servicing lead may include a number of condition monitoring elements. The condition monitoring elements may include management of all maintenance aspects such as performance monitoring, preventive maintenance, general repairs, component overhauls that may be required to assure optimal equipment performance, and the like.

In an example, the aftermarket servicing lead may be generated by the controller 106. In another example, the aftermarket servicing lead may be received by the controller 106 from an external source, without any limitations. For example, the aftermarket servicing lead may be generated by the ECM 104 of the machine 102 and the controller 106 may retrieve the data from the ECM 104 of the machine 102, the memory device associated with the ECM 104, or the database 108 of the system 100. Further, the aftermarket servicing lead is generated based on an operating hours of the machine 102, a historical repair data of the components 103 of the machine 102, a predicted lifespan of the components 103 of the machine 102, and/or a manufacturing date of the machine 102. The operating hours of the machine 102 are vital in repair and service of the machine 102 as the machine 102 with higher number of operating hours may have to be examined frequently. In some examples, the system 100 may be programmed to generate the aftermarket servicing lead if the operating hours of the machine 102 exceeds beyond a predefined number of hours.

The historical repair data of the machine components 103 may provide an insight of the machine components 103 that have been recently serviced, replaced, and the like. This information may be important when some machine components 103 have a requirement of servicing or replacement after a predefined amount of time. Further, the predicted lifespan of the components 103 of the machine 102 and the manufacturing date of the machine 102 provide an average time frame for which the machine components 103 are expected to work effectively and efficiently. Moreover, the aftermarket servicing lead may be generated using maintenance and repair agreements, site inspections, field services, in-shop services, asset details, and the like. It should be noted that the system 100 may also consider other factors apart from those mentioned herein for generating the aftermarket servicing lead.

Further, the controller 106 also receives a fault diagnosis data associated with the aftermarket servicing lead. The fault diagnosis data includes information pertaining to faults in the components 103 of the machine 102 that are associated with the aftermarket servicing lead. The fault may be associated with the components 103 such as the engine, the transmission, the hydraulic system, and the like. The fault diagnosis data for a particular machine component 103 may be generated based on a sales date of the machine 102, an application of the machine components 103, operating hours of a particular component 103, historical failure data associated with the machine components 103, historical repair data associated with the machine components 103, historical inspection data associated with the machine components 103, historical fluid test results associated with the machine components 103, and the like.

Further, the fault code is received from the machine 102 and is representative of a faulty operation of the components 103 of the machine 102. The fault code may be generated based on real time machine events. In an example, the fault code may include input signals transmitted to the controller 106 by the ECM 104. The ECM 104 may continuously receive inputs corresponding to faults associated with the machine components 103. For example, the ECM 104 may include an On-Board Diagnostics (OBD) system that may receive data from sensors of the machine 102. The sensors may include a mass airflow sensor, an engine speed sensor, an oxygen sensor, a spark knock sensor, a coolant sensor, a manifold absolute pressure sensor, a fuel temperature sensor, a voltage sensor, and the like, without limiting the scope of the present disclosure. Any undesired output from the sensor may be indicative of a fault associated with a particular component 103 with which the sensor is associated.

Further, the fluid test result is generated based on analysis of fluid samples associated with the components 103 of the machine 102. The fluid sample may include an oil sample, a coolant sample, a fuel sample, and the like. Further, a fluid test of various fluids associated with the components 103 of the machine 102 provide relevant information related to a performance of the corresponding components 103. The fluid test may be used to determine a quality of various fluids associated with the machine 102. For example, the fluid test may be used to predict component failures before a potential failure event. The fluid test may be carried out every 15 to 40 days. The fluid test provides the fluid test results of various fluids used in the machine 102 such as fuel, engine oil, coolants for different components 103 of the machine 102, power steering fluid, brake fluid, transmission fluid, various lubricants, and the like, without any limitations.

The fluid test is carried out based on collection of the fluid samples from the machine 102 onsite. The fluid samples may be analyzed in a laboratory to determine a condition/quality of the fluid. The fluid samples may include contaminants, such as debris, that may negatively affect the performance of the machine 102. In some examples, the fluid test result may measure contents of various substances present in the fluids. For example, the fluid test result may provide an indication of an amount of iron content in the fluid samples. The fluid test may include an oil sampling test, a coolant sampling test, a fuel sampling test, and the like.

The oil sampling test includes analysis of engine oil. Further, the oil sampling test may include analysis of the components 103 that require lubrication such as engines, transmission, hydraulics, final drive, differential gears, gear boxes, compressor, and the like. In an example, the oil sampling test provides early signs of wear and identifies contaminants in the engine oil such as water, fuel, glycol, dirt, and the like, that may degrade the performance of the machine 102. The condition of the engine oil is also determined in the oil sampling test for overall particle analysis.

Further, for the coolant sample test, a coolant sample is collected from the machine 102. The coolant sampling test determines a chemical balance of the coolant for thermal protection and better cooling efficiency. The coolant sampling test provides information pertaining to correct usage of the coolant, condition of the coolant, adequate freeze and boil protection of the coolant, contaminants in the coolant, and the like. Moreover, the fuel sampling test is performed on the fuel to determine fuel quality, A low-quality fuel can negatively affect the performance of the machine 102. Further, the low-quality fuel may lead to abnormal wear of components 103 such as valves, valve guides, piston ring, and the like. The fuel sampling test determines if the fuel quality is acceptable, determines microbial growth in the fuel, contaminants in the fuel, and the like.

In an example, the fluid test result may be stored in a database of the laboratory which can be retrieved by the controller 106 using the cloud computing system, the mobile application, the wireless transmission system, and the like. Alternatively, the fluid test results may be fed into the system 100 by a personnel in charge of fluid testing. The controller 106 compares the fluid test result and a predetermined threshold associated with the fluid samples for generation of the service report. The predetermined threshold associated with the fluid samples may be stored in the database 108 of the system 100. The predetermined threshold may include standard or optimal values for various parameters associated with the fluids.

Further, the inspection data may be generated based on the inspection of the machine 102. The inspection of the machine 102 may combine data collection and analysis with hands-on testing and examination for a thorough look at the condition of the machine 102. The inspection of the machine 102 may be performed by personnel who are skilled and trained to determine faults in the components 103 of the machine 102 that may impact machine performance. For example, the personnel may check various sensors, gauges, engine components, steering components, brake systems, exhaust system, cooling system, fan belts, engine support, radiator guards, transmission function, oil levels, hydraulic system, and the like. The inspection data of the various components 103 for the machine 102 is collected to verify a condition of the respective components 103. The inspection data may be stored in the ECM 104 and may be retrieved by the controller 106 or the inspection data may be transmitted directly to the database 108.

Further, the controller 106 correlates the fault diagnosis data with the fault code, the fluid test result, and/or the inspection data. In some examples, the fault diagnosis data is compared with the fault code, the fluid test result, and/or the inspection data to verify if the fault diagnosis data corresponds to the fault code, the fluid test result, and/or the inspection data.

The controller 106 assigns a priority for the servicing schedule based on the correlation between the fault diagnosis data and the fault code, the fluid test result, and/or the inspection data. More particularly, the controller 106 assigns a high priority for the servicing schedule if the fault diagnosis data matches with the fault code, the fluid test result, and/or the inspection data. In some examples, if the fault diagnosis data matches with even one of the fault code, the fluid test result, and/or the inspection data, the controller 106 may assign a high priority to such a servicing schedule. Further, if the fault diagnosis data matches with each one of the fault code, the fluid test result, and the inspection data, the controller 106 may assign a high priority to the servicing schedule and may also provide a notification to draw the service personnel's attention towards such an alarming situation.

In other example, the fault diagnosis data may not match with the fault code, the fluid test result, and/or the inspection data. In such an example, the controller 106 may assign a low priority for such a servicing schedule to indicate conflicts between the fault diagnosis data and the fault code, the fluid test result, and/or the inspection data.

In some examples, the controller 106 may also use the historical failure data and the historical repair data to generate an association model that indicates which components 103 of the machine 102 may be impacted based on certain real time machine events. In such an example, a pattern and occurrences of the historical failure data and the historical repair data may be used to map the historical failure data with the historical repair data. Such a mapping may assist in relating a particular fault code with the component 103 of the machine 102 that may be potentially impacted by the fault code.

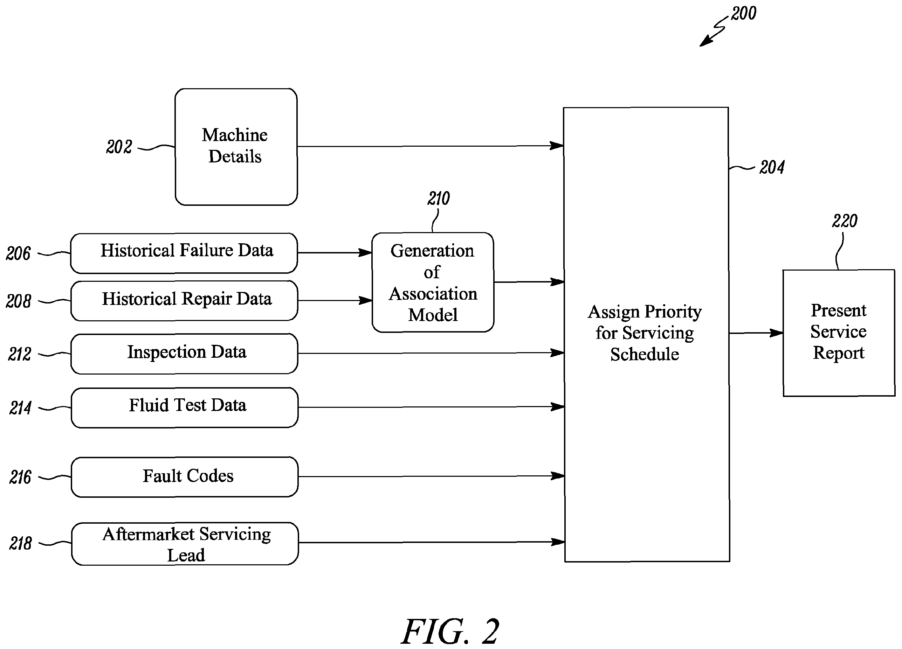

FIG. 2 is a flowchart of a process 200 to assign the priority for the servicing schedule. The process 200 may be executed by the controller 106. At a block 202, details related to the machine 102 such as a dealer of the machine 102, a location at which the machine 102 operates, a machine serial number, warranty data, service engineer details, Customer Value Agreement (CVA), and the like, are received by the controller 106. The controller 106 may receive the details from the ECM 104 of the machine 102 or the database 108 of the system 100. Further, from the block 202, the details are transmitted to a block 204. At blocks 206 and 208, the controller 106 receives the details representing the historical failure data and the historical repair data associated with the machine 102. Data from the blocks 206, 208 are sent to a block 210 where the association model based on mapping of either the historical failure data to the historical repair data or for various historical repair data associated with a particular component 103 is generated. It should be noted that the association model for the historical failure data and the historical repair data is generated based on recentness of the historical failure data and the historical repair data, frequency of occurrences of failures/repairs, monetary value associated with the failures/repairs, and the like. The association models are then received by the controller 106 at the block 204. Further, from a block 212, the inspection data is received by the controller 106. At a block 214, the fluid test result is received by the controller 106. At a block 216, data related to the fault code is received by the controller 106. At a block 218, information related to the aftermarket servicing lead is received by the controller 106 or the aftermarket servicing lead may be generated by the controller 106.

From the blocks 202, 210, 212, 214, 216, 218, the process 200 moves to the block 204. At the block 204, the controller 106 assigns the priority for the servicing schedule. For this purpose, the controller 106 generates a confidence score based on correlation between the input signal from the block 218 and the input signals from the blocks 202, 210, 212, 214, 216. Specifically, at the block 204, a high confidence score is generated if the input signal from the block 218 matches with the input signals from the blocks 202, 210, 212, 214, 216. Further, the controller 106 generates a low confidence score if the input signal from the block 218 does not match with the input signals from the blocks 202, 210, 212, 214, 216. Moreover, the high priority of the servicing schedule is assigned to the servicing schedule having the high confidence score and the low priority of the servicing schedule is assigned to the servicing schedule having the low confidence score. The high or low priority can be assigned at a component level, a subcomponent level, a model level, and the like. Further, the high priority of the servicing schedule generates an aftermarket part sale lead. From the block 204, the process 200 moves to a block 220. At the block 220, the user interface 110 presents the service report including the prognosis data to the servicing personnel.

Referring now to FIG. 1, the service report containing the servicing information is presented on the user interface 110. The service report includes the prognosis data based on the analysis of the input signal. The prognosis data may include actionable events or remedies that can be applied for servicing or maintenance of the components 103 of the machine 102 that are not operating in an intended manner. For instance, the user interface 110 may display the fault in the machine components 103 and actions that can be taken by the servicing personnel to solve the related faults. Moreover, the prognosis data includes a first prognosis data for the aftermarket servicing lead and a second prognosis data for the fault code, the fluid test result, and/or the inspection data.

Further, in the service report, the first prognosis data is generated based on the fault diagnosis data. The first prognosis data may include actionable events that may be performed for addressing the faults presented in the machine 102 based on the fault diagnosis data. Moreover, in the service report, the second prognosis data is generated based on the fault code, the fluid test result, and/or the inspection data. The second prognosis data may include actionable events that may be performed for addressing the faults presented in the machine 102 based on the data from the fault code, the fluid test result, and/or the inspection data.

The prognosis data shows whether the aftermarket servicing lead and the fault code, the fluid test result, and/or the inspection data are related to similar or dissimilar faults which may in turn affect an acceptance level for the servicing schedule. For example, the service report may disclose if the first prognosis data matches with the second prognosis data or if the first prognosis data does not match with the second prognosis data. **In** some examples, if the first prognosis data matches with the second prognosis data, a probability of the acceptance level of the servicing schedule may increase. **In** other examples, if the first prognosis data does not match with the second prognosis data, a probability of the acceptance level of the servicing schedule may decrease.

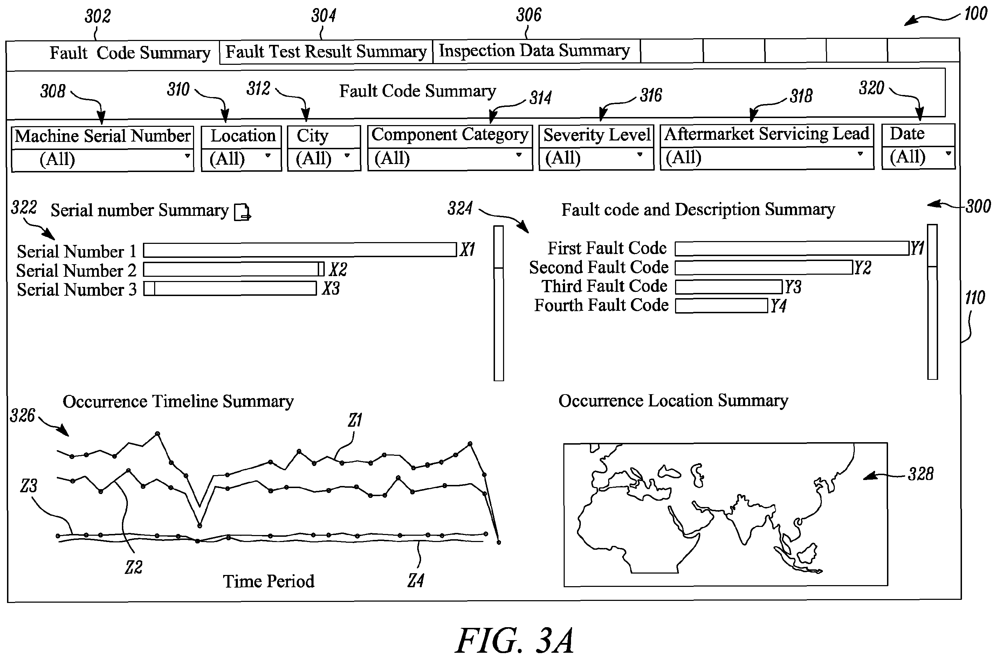

FIG. 3A illustrates an exemplary dashboard 300 that may be displayed on the user interface 110. The dashboard 300 includes a first tab 302 for a fault code summary, a second tab 304 for a fluid test result summary, and a third tab 306 for an inspection data summary. Each of the first, second, and third tabs 302, 304, 306 may allow a user of the system 100 to obtain information related to the fault code, the fluid test result, and the inspection data, respectively. More specifically, when accessed, the first, second, and third tabs 302, 304, 306 may allow the user to view details related to a number of the fault codes, the fluid test results, and the inspection data, respectively, for a particular machine or for a group of machines. The machine may be similar to the machine 102 (see FIG. 1). For explanatory purposes, the dashboard 300 that will be displayed based on accessing the first tab 302 will now be explained in detail. However, it should be understood that the information provided below is equally applicable to the second and third tabs 304, 306.

As illustrated herein, the dashboard 300 includes a first dropdown 308 for serial numbers associated with different machines, a second dropdown 310 for location at which the machines are operating, a third dropdown 312 for city in which the machines are operating, a fourth dropdown 314 for component category, a fifth dropdown 316 for severity level, a sixth dropdown 318 for the aftermarket servicing lead, and a seventh dropdown 320 for date. The dropdowns 308, 310, 312, 314, 316, 318, 320 may be used to filter data that will be displayed on the dashboard 300 based on user preferences. For example, the system 100 may store information related to a variety of machines having serial number 1, serial number 2, serial number 3, and the like. The user can use the first dropdown 308 for accessing information related to a particular serial number amongst the serial numbers 1, 2, 3. Further, the second and third dropdowns 310, 312 may be used to filter and look for information based on the location, such as a country or a state where the machines are operating, or the city where the machines are operating. The fourth dropdown 314 may be used to filter information related to different component categories of a single machine or multiples machines. Moreover, the fifth dropdown 316 may be used to filter information based on severity level associated with the fault codes.

The sixth dropdown 318 may be used to access data of the serial numbers 1, 2, 3 that have an associated aftermarket servicing lead. For example, the sixth dropdown 318 may provide an option of "YES" or "NO" for the user. When the user chooses the option "NO", the system 100 does not map the fault code data with the fault code diagnosis data associated with the aftermarket servicing lead and presents data related only to the fault codes. Whereas, when the user chooses the option "YES", the system 100 maps the fault code data with the fault code diagnosis data associated with the aftermarket servicing lead. In an example, the severity level may be divided into four levels, i.e., a first level, a second level, a third level, and a fourth level such that the first level denotes high severity, and the fourth level denotes low severity.

Further, the dashboard 300 includes a serial number summary 322 containing the serial numbers 1, 2, 3. In the illustrated example, a number of fault codes "X1", "X2", "X3" generated for a particular serial number 1, 2, 3 is displayed adjacent to the serial number 1, 2, 3. As an example, a machine with the serial number 1 transmitted "X1" numbers of fault codes in a period of one month, a machine with the serial number 2 transmitted "X2" numbers of fault codes in a period of one month, and a machine with the serial number 3 transmitted "X3" numbers of fault codes in a period of one month. Further, the tabs for "X1", "X2", and "X3" may include indicators to imply the severity level associated with the fault codes. Such indicators may include for example, a color coding, a hatching, and the like.

Moreover, the dashboard 300 includes a fault code and description summary 324 containing various fault codes and description related to such fault codes. As illustrated, the fault code and description summary 324 may display a first fault code and a total number of first occurrences "Y1" for the first fault code, a second fault code and a total number of second occurrences "Y2" for the second fault code, a third fault code and a total number of third occurrences "Y3" for the third fault code, a fourth fault code and a total number of fourth occurrences "Y4" for the fourth fault code, and so on. In this example, the total number of occurrences "Y1", "Y2", "Y3", "Y4" associated with different fault codes for all the serial numbers 1, 2, 3 is illustrated. Alternatively, the user may use the first dropdown 308 to view occurrences for different fault codes associated with one of the serial numbers 1, 2, 3. Further, the tabs for the occurrences "Y1", "Y2", "Y3", "Y4" may include indicators to indicate the severity level associated with the fault codes. Such indicators may include for example, a color coding, a hatching, and the like.

Further, the dashboard 300 includes an occurrence timeline summary 326. The occurrence timeline summary 326 may include various plots "Z1", "Z2", "Z3", "Z4" generated based on plotting of occurrences of different fault codes in a particular time period. Each plot "Z1", "Z2", "Z3", "Z4" may also signify a severity level associated with the fault codes. The plots may include different color coding based on the severity levels. It should be noted that the plots "Z1", "Z2", "Z3", "Z4" may be generated for the fault codes associated with a particular serial number 1, 2, or 3 or the plots "Z1", "Z2", "Z3", "Z4" may be generated for the fault codes associated with all the serial numbers 1, 2, 3. Further, the dashboard 300 includes an occurrence location summary 328. The occurrence location summary 328 may display details of locations, such as states or countries, at which the serial numbers 1, 2, 3 with the fault codes are present.

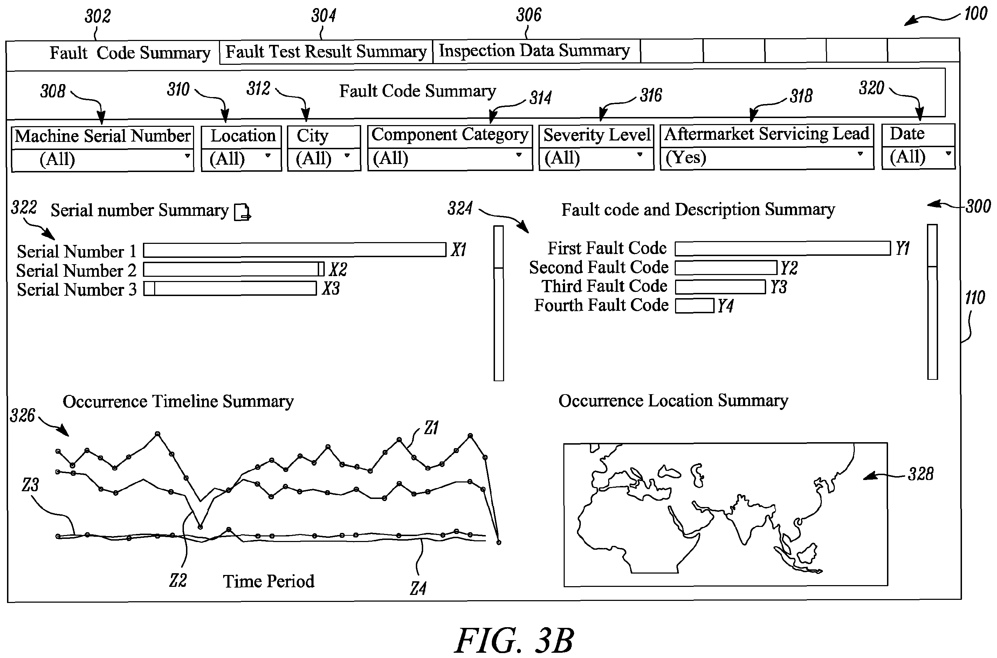

Referring now to FIG. 3B, the dashboard 300 illustrates information that will be displayed if the option "YES" is selected using the sixth dropdown 318. A mapping of the fault code data with the aftermarket servicing lead changes the total number of the occurrences "Y1", "Y2", "Y3", "Y4" for the corresponding fault codes. In an example, the total number of occurrences "Y1", "Y2", "Y3", "Y4" may reduce to only display data that is derived based on mapping of the fault code data and the fault diagnosis data. More particularly, the total number of the occurrences "Y1", "Y2", "Y3", "Y4" in a particular serial number 1, 2, 3 or associated components may be determined based on matching of the fault code data and the fault diagnosis data associated with the aftermarket servicing lead.

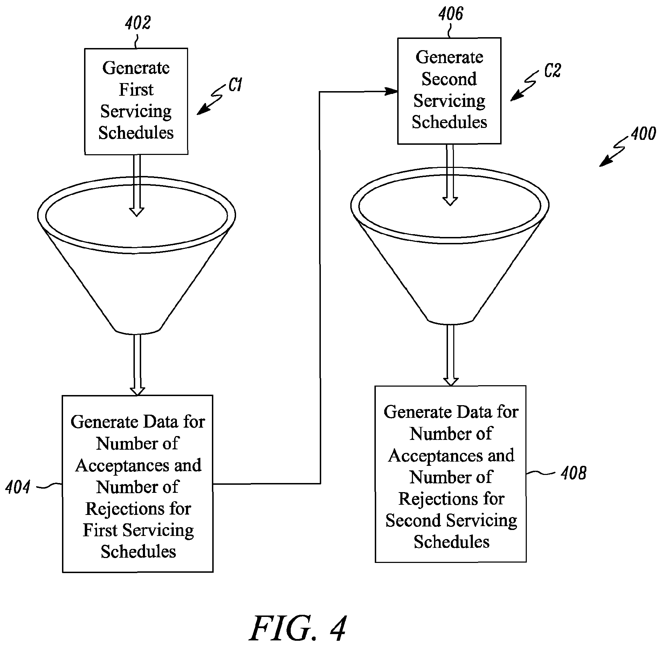

FIG. 4 shows a schematic diagram 400 illustrating impact of the fault code, the fluid test result, and/or the inspection data on an acceptance level of a total number of first servicing schedules for the machine 102. In a first cycle "C1", the first servicing schedules are generated at a block 402 based on the aftermarket servicing lead. The first servicing schedules are presented to the customer for review. Further, at a block 404, data corresponding to a number of acceptances and a number of rejections for the first servicing schedules is generated based on the customer review. It has been observed that the acceptance level of the various first servicing schedules is generally low in the first cycle "C1" as only data from the aftermarket servicing lead is used for generating the first servicing schedules.

In a second cycle "C2", a number of second servicing schedules are generated at a block 406 based on the fault code, the fluid test result, and/or the inspection data. The second servicing schedules are presented to the customer for review. Further, at a block 408, data corresponding to a number of acceptances and a number of rejections for the second servicing schedules is generated based on the customer review. It has been observed that the acceptance level of the various second servicing schedules is generally high in the second cycle "C2" as data from the aftermarket servicing lead as well as data associated with the fault code, the fluid test result, and/or the inspection data is used for generating the second servicing schedules. Specifically, in the second cycle, if the first prognosis data matches with the second prognosis data, the confidence level of the customer increases which in turn increases the acceptance level of the servicing schedule.

In one example, the servicing schedule for the machine 102 includes the first prognosis data for rebuilding the engine of the machine 102. Further, the fault code for this example may include the second prognosis data that indicates fault in a sensor associated with the engine. Thus, the second prognosis data relates to replacement of the sensor rather than rebuilding the engine, which may be cost effective. An upfront provision of details corresponding to a real time machine event based on the fault code data allows precise identification of the issue with the machine 102. Moreover, the servicing schedule without the fault code may be rejected by the customer while a lead generated based on the fault code may be pursued for generating the servicing/maintenance of the machine 102 due to the upfront provision of the fault code.

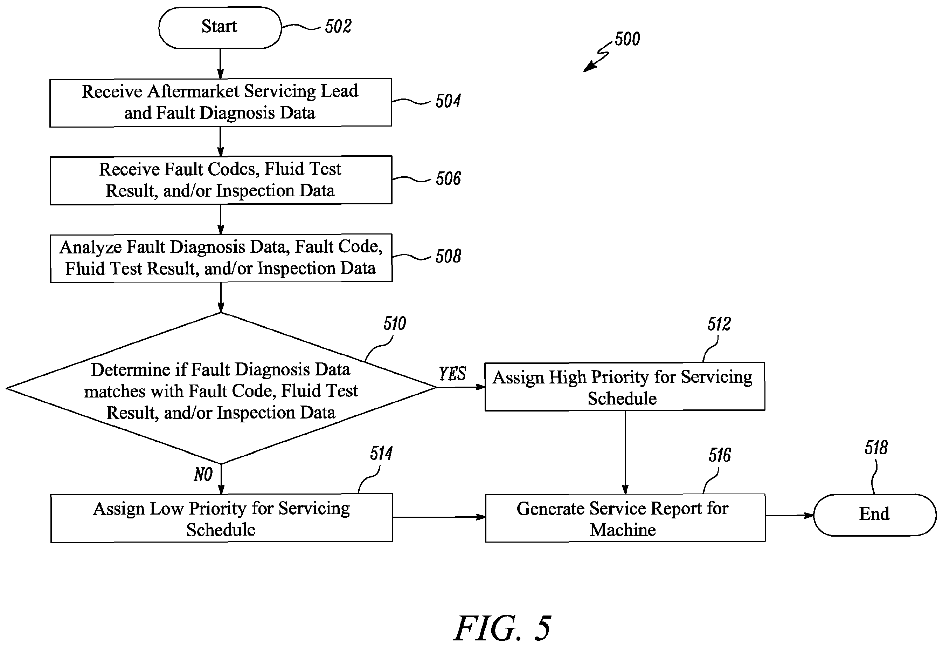

FIG. 5 illustrates a flowchart of a process 500 (or an algorithm) for generating the servicing schedule for the machine 102. Referring to FIGS. 1 to 45, the process 500 may be executed by the controller 106. The process 500 may be stored within the database 108 of the system 100 and may be retrieved for execution by the controller 106. At a block 502, the process 500 starts or begins operation. At a block 504, the controller 106 receives the aftermarket servicing lead and the fault diagnosis data from the database 108 of the system 100 or the ECM 104 of the machine 102. In another example, the aftermarket servicing lead and the fault diagnosis data is generated by the controller 106 itself based on various inputs from the ECM 104 of the machine 102, the database 108, or any other external sources. The fault diagnosis data may be associated with the components 103 of the machine 102 such as the engine, the transmission, the hydraulics, and the like.

The process 500 then moves to a block 506. At the block 506, the controller 106 receives the fault code, the fluid test result, and/or the inspection data. Further, the fault code is received by the controller 106 from the ECM 104 of the machine 102. The fluid test result may be fed to the controller 106 by the servicing personnel, a third-party application, or it may be present in the database 108. Moreover, the inspection data is fed to the controller 106 by the servicing personnel, a third-party application, or it may be present in the database 108. In some examples, the fluid test result and the inspection data may be received from the ECM 104 of the machine 102.

The process 500 then moves to a block 508. At the block 508, the controller 106 analyze the fault diagnosis data as well as the fault code, the fluid test result, and/or the inspection data. For example, the controller 106 may determine if the fluid test result lie within the predetermined threshold or beyond the predetermined threshold or if the aftermarket servicing lead should be scheduled. The process 500 then moves to a block 510. At the block 510, the controller 106 determines if the fault diagnosis data matches with the fault code, the fluid test result, and/or the inspection data. Specifically, the controller 106 compares if the fault diagnosis data corresponds to the fault code, the fluid test result, and/or the inspection data based on correlating the fault diagnosis data with the fault code, the fluid test result, and/or the inspection data. If the fault diagnosis data matches with the fault code, the fluid test result, and/or the inspection data, the process 500 moves to a block 512. At the block 512, the controller 106 assigns the high priority for the servicing schedule. The process 500 then moves to a block 514. At the block 514, the controller 106 generates the service report for the machine 102. The service report may include the fault diagnosis data, data related to the fault code, the fluid test result, and/or the inspection data, the first prognosis data, the second prognosis data, and the like. The service report is then utilized to generate the servicing schedule of the machine 102.

However, at the block 510, if the fault diagnosis data does not match with the fault code, the fluid test result, and/or the inspection data, the process 500 moves to a block 516. At the block 516, the controller 106 assigns the low priority for the servicing schedule. The process 500 then moves to the block 514. At the block 514, the controller 106 generates the service report for the machine 102. From the block 514, the process 500 moves to a block 518 where the process 500 terminates or ends operation.

### Industrial Applicability

The present disclosure relates to the system 100 for generating the servicing schedule for the machine 102. The system 100 generates the servicing schedule based on the aftermarket servicing lead as well as the data associated with the fault code, the fluid test result, and/or the inspection data. An upfront integration and presentation of the servicing information offers real-time insights on the condition of the machine 102 for performing servicing/maintenance of the machine 102. Further, the correlation between the fault diagnosis data and the fault code, the fluid test result, and/or the inspection data and the upfront presentation of the real-time machine condition increases the confidence level of the customer which ultimately increases the acceptance level of the servicing schedule. Moreover, the presentation of the servicing schedule on the user interface 110 provides improved clarity to the customers of the machine 102 which reduces a data processing time associated with the servicing schedules.

The system 100 also increases an accuracy and a precision of the servicing schedule, which eliminates any unplanned or unnecessary repair downtime of the machine 102. Further, the fault code, the fluid test result, and the inspection data provide the servicing information on a real-time basis which improves accuracy and precision as compared to the data or prognosis presented by just the aftermarket servicing lead. In some cases, the data associated with the fault code, the fluid test result, and/or the inspection data may provide a more detailed and reliable insight of the condition of the components 103 of the machine 102, which in turn eliminates excessive cost of replacement or repair of the machine components 103 having a higher value, improves resale value of the machine 102, and the like.

The system 100 also reduces cost of repair or replacement by giving prior intimation of the servicing schedule before failure of the machine components 103. The prior intimation and corresponding initiation of the servicing may prevent failure of the components 103 and eliminate unnecessary servicing/repair of the machine components 103. Further, a successful servicing schedule may extend the lifespan of the machine 102 and minimize equipment breakdown.

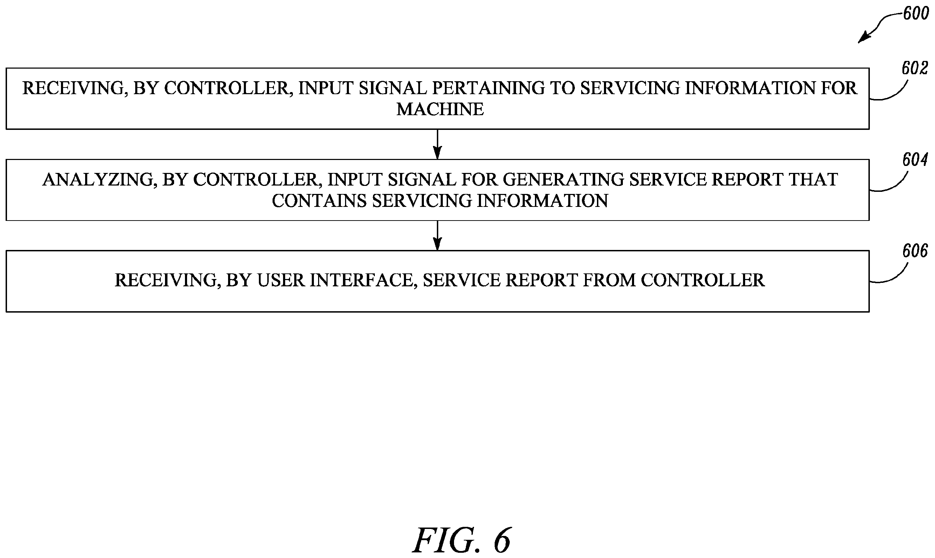

FIG. 6 illustrates a flowchart of a method 600 for generating the servicing schedule for the machine 102. At step 602, the controller 106 receives the input signal pertaining to the servicing information for the machine 102. The servicing information includes the aftermarket servicing lead, the fault code from the machine 102, the fluid test result for the machine 102, and/or the inspection data for the machine 102. The controller 106 generates the aftermarket servicing lead based on the operating hours of the machine 102, the historical repair data of the components 103 of the machine 102, the predicted lifespan of the components 103 of the machine 102, and/or the manufacturing date of the machine 102. The controller 106 also receives the fault diagnosis data associated with the aftermarket servicing lead.

Further, the controller 106 receives the fault code from the machine 102. The fault code is representative of the faulty operation of the components 103 of the machine 102. Moreover, the fluid test result is generated based on analysis of the fluid samples associated with the components 103 of the machine 102. Further, the service report is generated based on comparison between the fluid test result and the predetermined threshold associated with the fluid samples for generation of the service report.

At step 604, the controller 106 analyzes the input signal for generating the service report that contains the servicing information. The controller 106 correlates the fault diagnosis data with the fault code, the fluid test result, and/or the inspection data. The controller 106 assigns the priority for the servicing schedule based on the correlation between the fault diagnosis data and the fault code, the fluid test result, and/or the inspection data. The controller 106 also assigns the high priority for the servicing schedule if the fault diagnosis data matches with the fault code, the fluid test result, and/or the inspection data.

At step 606, the user interface 110 receives the service report from the controller 106. The user interface 110 presents the service report thereon. Further, the service report includes the prognosis data based on the analysis of the input signal. The service report also includes the first prognosis data for the aftermarket servicing lead and the second prognosis data for the fault code, the fluid test result, and/or the inspection data. The service report is used for generating the servicing schedule for the machine 102.

While aspects of the present disclosure have been particularly shown and described with reference to the embodiments above, it will be understood by those skilled in the art that various additional embodiments may be contemplated by the modification of the disclosed machines, systems and methods without departing from the scope of what is disclosed. Such embodiments should be understood to fall within the scope of the present disclosure as determined based upon the claims and any equivalents thereof.

## Claims

1. A system (100) for generating a servicing schedule for a construction machine (102), the system (100) comprising:
a controller (106) configured to:
receive an input signal pertaining to a servicing information for the construction machine (102), wherein the servicing information includes an aftermarket servicing lead, and one or more of a fault code from the construction machine (102), a fluid test result for the construction machine (102), and an inspection data for the construction machine (102); and
analyze the input signal for generating a service report that contains the servicing information, wherein the service report is used for generating the servicing schedule for the construction machine (102); and
a user interface (110) for receiving the service report from the controller (106), wherein the user interface (110) presents the service report thereon.

2. The system (100) of claim 1, wherein the controller (106) is further configured to receive a fault diagnosis data associated with the aftermarket servicing lead.

3. The system (100) of claim 2, wherein the controller (106) is further configured to:
correlate the fault diagnosis data with at least one of the fault code, the fluid test result, and the inspection data; and
assign a priority for the servicing schedule based on the correlation between the fault diagnosis data and at least one of the fault code, the fluid test result, and the inspection data.

4. The system (100) of claim 3, wherein the controller (106) is further configured to assign a high priority for the servicing schedule if the fault diagnosis data matches with at least one of the fault code, the fluid test result, and the inspection data.

5. The system (100) of claim 1, wherein the service report includes prognosis data based on the analysis of the input signal.

6. The system (100) of claim 5, wherein the prognosis data includes a first prognosis data for the aftermarket servicing lead and a second prognosis data for at least one of the fault code, the fluid test result, and the inspection data.

7. The system (100) of claim 1, wherein the aftermarket servicing lead is generated based on at least one of an operating hours of the construction machine (102), a historical repair data of one or more components (103) of the construction machine (102), a predicted lifespan of one or more components (103) of the construction machine (102), and a manufacturing date of the construction machine (102).

8. The system (100) of claim 1, wherein the fault code is received from the construction machine (102) and is representative of a faulty operation of one or more components (103) of the construction machine (102).

9. The system (100) of claim 1, wherein the fluid test result is generated based on analysis of at least one fluid sample associated with one or more components (103) of the construction machine (102).

10. The system (100) of claim 9, wherein the controller (106) is further configured to compare the fluid test result and a predetermined threshold associated with the at least one fluid sample for generation of the service report.

11. A method for generating a servicing schedule for construction machine (102), the method comprising:
receiving, by a controller (106), an input signal pertaining to a servicing information for the construction machine (102), wherein the servicing information includes an aftermarket servicing lead, and one or more of a fault code from the construction machine (102), a fluid test result for the construction machine (102), and an inspection data for the construction machine (102); and
analyzing, by the controller (106), the input signal for generating a service report that contains the servicing information, wherein the service report is used for generating the servicing schedule for the construction machine (102); and
receiving, by a user interface (110), the service report from the controller (106), wherein the user interface (110) presents the service report thereon.

## Patentansprüche

1. System (100) zum Erzeugen eines Wartungsplans für eine Baumaschine (102), das System (100) umfassend:
eine Steuerung (106), die konfiguriert ist zum:
Empfangen eines Eingangssignals, das sich auf Wartungsinformationen für die Baumaschine (102) bezieht, wobei die Wartungsinformationen einen Aftermarket-Wartungshinweis und eines oder mehrere von einem Fehlercode von der Baumaschine (102), einem Fluidtestergebnis für die Baumaschine (102) und Inspektionsdaten für die Baumaschine (102) einschließen; und
Analysieren des Eingangssignals zum Erzeugen eines Wartungsberichts, der die Wartungsinformationen enthält, wobei der Wartungsbericht zum Erzeugen des Wartungsplans für die Baumaschine (102) verwendet wird; und
eine Benutzerschnittstelle (110) zum Empfangen des Wartungsberichts von der Steuerung (106), wobei die Benutzerschnittstelle (110) den Wartungsbericht darauf zeigt.

2. System (100) nach Anspruch 1, wobei die Steuerung (106) ferner konfiguriert ist, um Fehlerdiagnosedaten zu empfangen, die mit dem Aftermarket-Wartungshinweis verknüpft sind.

3. System (100) nach Anspruch 2, wobei die Steuerung (106) ferner konfiguriert ist zum:
Korrelieren der Fehlerdiagnosedaten mit mindestens einem von dem Fehlercode, dem Fluidtestergebnis und den Inspektionsdaten; und
Zuweisen einer Priorität für den Wartungsplan basierend auf der Korrelation zwischen den Fehlerdiagnosedaten und mindestens einem von dem Fehlercode, dem Fluidtestergebnis und den Inspektionsdaten.

4. System (100) nach Anspruch 3, wobei die Steuerung (106) ferner konfiguriert ist, um eine hohe Priorität für den Wartungsplan zuzuweisen, wenn die Fehlerdiagnosedaten mit mindestens einem von dem Fehlercode, dem Fluidtestergebnis und den Inspektionsdaten übereinstimmen.

5. System (100) nach Anspruch 1, wobei der Wartungsbericht Prognosedaten basierend auf der Analyse des Eingangssignals einschließt.

6. System (100) nach Anspruch 5, wobei die Prognosedaten erste Prognosedaten für den Aftermarket-Wartungshinweis und zweite Prognosedaten für mindestens eines vom dem Fehlercode, dem Fluidtestergebnis und den Inspektionsdaten einschließen.

7. System (100) nach Anspruch 1, wobei der Aftermarket-Wartungshinweis basierend auf mindestens einem von Betriebsstunden der Baumaschine (102), historischen Reparaturdaten einer oder mehrerer Komponenten (103) der Baumaschine (102), einer voraussichtlichen Lebensdauer einer oder mehrerer Komponenten (103) der Baumaschine (102) und einem Herstellungsdatum der Baumaschine (102) erzeugt wird.

8. System (100) nach Anspruch 1, wobei der Fehlercode von der Baumaschine (102) empfangen wird und einen fehlerhaften Betrieb einer oder mehrerer Komponenten (103) der Baumaschine (102) darstellt.

9. System (100) nach Anspruch 1, wobei das Fluidtestergebnis basierend auf einer Analyse von mindestens einer Fluidprobe erzeugt wird, die mit einer oder mehreren Komponenten (103) der Baumaschine (102) verknüpft ist.

10. System (100) nach Anspruch 9, wobei die Steuerung (106) ferner konfiguriert ist, um das Fluidtestergebnis und einen vorgegebenen Schwellenwert, der mit der mindestens einen Fluidprobe verknüpft ist, für die Erzeugung des Wartungsberichts zu vergleichen.

11. Verfahren zum Erzeugen eines Wartungsplans für eine Baumaschine (102), das Verfahren umfassend:
Empfangen eines Eingangssignals durch eine Steuerung (106), das sich auf Wartungsinformationen für die Baumaschine (102) bezieht, wobei die Wartungsinformationen einen Aftermarket-Wartungshinweis und eines oder mehrere von einem Fehlercode der Baumaschine (102), einem Fluidtestergebnis für die Baumaschine (102) und Inspektionsdaten für die Baumaschine (102) einschließen; und
Analysieren des Eingangssignals durch die Steuerung (106) zum Erzeugen eines Wartungsberichts, der die Wartungsinformationen enthält, wobei der Wartungsbericht zum Erzeugen des Wartungsplans für die Baumaschine (102) verwendet wird; und
Empfangen des Wartungsberichts von der Steuerung (106) durch eine Benutzerschnittstelle (110), wobei die Benutzerschnittstelle (110) den Wartungsbericht darauf zeigt.

## Revendications

1. Système (100) permettant de générer un programme d'entretien pour un engin de chantier (102), le système (100) comprenant :
un organe de commande (106) configuré pour :
recevoir un signal d'entrée en rapport avec des informations d'entretien pour l'engin de chantier (102), dans lequel les informations d'entretien comportent une indication d'entretien après-vente, et un ou plusieurs parmi un code de défaut provenant de l'engin de chantier (102), un résultat de test de fluide pour l'engin de chantier (102), et des données d'inspection pour l'engin de chantier (102) ; et
analyser le signal d'entrée pour générer un rapport d'entretien qui contient les informations d'entretien, dans lequel le rapport d'entretien est utilisé pour générer le programme d'entretien pour l'engin de chantier (102) ; et
une interface utilisateur (110) permettant de recevoir le rapport d'entretien en provenance de l'organe de commande (106), dans lequel l'interface utilisateur (110) présente le rapport d'entretien sur celle-ci.

2. Système (100) selon la revendication 1, dans lequel l'organe de commande (106) est configuré en outre pour recevoir des données de diagnostic de défaut associées à l'indication d'entretien après-vente.

3. Système (100) selon la revendication 2, dans lequel l'organe de commande (106) est configuré en outre pour :
corréler les données de diagnostic de défaut avec au moins l'un parmi le code de défaut, le résultat de test de fluide et les données d'inspection ; et
attribuer une priorité pour le programme d'entretien en fonction de la corrélation entre les données de diagnostic de défaut et au moins l'un parmi le code de défaut, le résultat de test de fluide et les données d'inspection.

4. Système (100) selon la revendication 3, dans lequel l'organe de commande (106) est configuré en outre pour attribuer une priorité élevée pour le programme d'entretien si les données de diagnostic de défaut concordent avec au moins l'un parmi le code de défaut, le résultat de test de fluide et les données d'inspection.

5. Système (100) selon la revendication 1, dans lequel le rapport d'entretien comporte des données de pronostic en fonction de l'analyse du signal d'entrée.

6. Système (100) selon la revendication 5, dans lequel les données de pronostic comportent des premières données de pronostic pour l'indication d'entretien après-vente et des secondes données de pronostic pour au moins l'un parmi le code de défaut, le résultat de test de fluide et les données d'inspection.

7. Système (100) selon la revendication 1, dans lequel l'indication d'entretien après-vente est générée en fonction d'au moins l'un parmi des heures de fonctionnement de l'engin de chantier (102), des données historiques de réparation d'un ou plusieurs composants (103) de l'engin de chantier (102), une espérance de vie prédite d'un ou plusieurs composants (103) de l'engin de chantier (102) et une date de fabrication de l'engin de chantier (102).

8. Système (100) selon la revendication 1, dans lequel le code de défaut est reçu de l'engin de chantier (102) et est représentatif d'un fonctionnement défectueux d'un ou plusieurs composants (103) de l'engin de chantier (102).

9. Système (100) selon la revendication 1, dans lequel le résultat de test de fluide est généré en fonction d'une analyse d'au moins un échantillon de fluide associé à un ou plusieurs composants (103) de l'engin de chantier (102).

10. Système (100) selon la revendication 9, dans lequel l'organe de commande (106) est configuré en outre pour comparer le résultat de test de fluide et un seuil prédéterminé associé à l'au moins un échantillon de fluide pour la génération du rapport d'entretien.

11. Procédé permettant de générer un programme d'entretien pour un engin de chantier (102), le procédé comprenant :
la réception, par un organe de commande (106), d'un signal d'entrée en rapport avec des informations d'entretien pour l'engin de chantier (102), dans lequel les informations d'entretien comportent une indication d'entretien après-vente, et un ou plusieurs parmi un code de défaut provenant de l'engin de chantier (102), un résultat de test de fluide pour l'engin de chantier (102), et des données d'inspection pour l'engin de chantier (102) ; et
l'analyse, par l'organe de commande (106), du signal d'entrée pour générer un rapport d'entretien qui contient les informations d'entretien, dans lequel le rapport d'entretien est utilisé pour générer le programme d'entretien pour l'engin de chantier (102) ; et
la réception, par une interface utilisateur (110), du rapport d'entretien en provenance de l'organe de commande (106), dans lequel l'interface utilisateur (110) présente le rapport d'entretien sur celle-ci.
